# EUROPÄISCHE PATENTSCHRIFT

(11) **EP 3 170 647 B1**
(45) Veröffentlichungstag und Bekanntmachung des Hinweises auf die Patenterteilung: **30.09.2020**
(21) Anmeldenummer: 15195040.9
(22) Anmeldetag: 17.11.2015
(51) Int. Cl.: B29C 65/44, B29C 65/06, B29C 65/46, B29C 65/10

(54) **VERFAHREN ZUR HERSTELLUNG EINES VERBUNDELEMENTS UMFASSEND EIN METALLPROLIELEMENT UND EINEN KUNSTSTOFFSCHAUMKÖRPER**
PROCESS FOR PRODUCING A COMPOSITE ELEMENT COMPRISING A METAL PROFILE AND A PLASTIC FOAM BODY
PROCÉDÉ DE FABRICATION D'UN ÉLEMENT COMPOSITE COMPRENANT UN PROFILÉ METALLIQUE ET UN CORPS EN MOUSSE PLASTIQUE

(43) Veröffentlichungstag der Anmeldung: 24.05.2017
(73) Patentinhaber: Airex AG, 5643 Sins (CH)
(72) Erfinder: Wissler, Michael, 8912 Obfelden (CH); Gaul, Martin, 5244 Birrhard (CH)
(74) Vertreter: Patentanwälte Behrmann Wagner PartG mbB

(56) Entgegenhaltungen:
- WO-A1-84/01203
- JP-A- S61 228 936
- US-A1- 2010 079 970
- PIHLIPP AMEND ET AL: "Artungleiche Werkstoffe fuegen", KUNSTSTOFFE, CARL HANSER VERLAG, MUNCHEN, DE, Bd. 102, Nr. 12, 1. Januar 2012 (2012-01-01), Seiten 56-58, XP001526499, ISSN: 0023-5563

## Beschreibung

Die Erfindung betrifft ein Verfahren zum Herstellen eines Verbundelementes, insbesondere eines Fenster- oder Türrahmenelementes gemäß dem Oberbegriff des Anspruchs 1, mit den Schritten des Bereitstellens mindestens eines Metallprofilelementes, insbesondere aus einer Leichtmetalllegierung sowie des Bereitstellens mindestens eines thermoplastischen (schmelzbaren) Kunststoffschaumkörpers, bevorzugt aus PET sowie des Festlegens (Fixieren) des Kunststoffschaumkörpers an dem Metallprofilelement. Ferner betrifft die Erfindung ein, bevorzugt mit einem derartigen Verfahren hergestelltes Fenster- oder Türrahmenelement, gemäß dem Oberbegriff des Anspruchs 12, umfassend mindestens ein Metallprofilelement, insbesondere aus einer Leichtmetalllegierung, bevorzugt einer Aluminiumlegierung sowie mindestens einen daran festgelegten thermoplastischen Kunststoffschaumkörper, bevorzugt aus PET.

Mittlerweile werden zum Vermeiden von Kältebrücken bzw. zur Verbesserung des Gesamtwärmeleitfähigkeitskoeffizienten von Fenstern und Türen Rahmen eingesetzt, bei denen zwischen Rahmeninnenschale und Rahmenaußenschale ein Kunststoffschaumkörper angeordnet ist. Derartige Fenster- und Türrahmen sind beispielsweise in der EP 2 666 949 A1 beschrieben. Probleme bereitet dabei noch die Herstellung verlässlicher Verbindungen zwischen Kunststoffschaumkörper und den Metallrahmenprofilen. Die vorgenannte Druckschrift nennt verschiedene Möglichkeiten zum Herstellen einer solchen Verbindung, wobei es insbesondere bekannt ist, die Kunststoffschaumkörper über Kunststofffixierelemente an den Metallrahmenprofilen zu fixieren, wobei zwischen den Fixierelementen und den Metallrahmenprofilen eine Formschlussverbindung, beispielsweise eine Schwalbenschwanzverbindung realisiert ist. Alternative Verbindungsmöglichkeiten sehen die unmittelbare formschlüssige Fixierung der Kunststoffschaumkörper an den Metallrahmenprofilen vor.

Zum weiteren Stand der Technik wird zudem noch auf die DE 20 2010 001 301 U1 verwiesen.

Die bekannten Verbindungen zwischen Kunststoffschaumkörper und Metallprofilelement sind aufwendig in der Herstellung und somit kostenintensiv.

Aus der WO 84/01203 A1 ist ein Verfahren zum Verbinden einer Rohrisolierung mit einem Metallrohr bekannt, wobei die Kunststoffisolierung auf das Rohr aufgeschoben und dieses dann durch Bestromen erhitzt wird.

Die JP S61 228936 A beschreibt ein Verfahren zum spaltfreien Verbinden eines Metallteils mit einem geschäumten Polystyrolkörper, wobei das Metallteil in einer Form zum Formen des Polystyrolteils aufgenommen wird und die Verbindung zwischen Polystyrolteil und Schaumkörper durch Druckschweißen erzeugt wird. Die Erwärmung des Metallteils erfolgt durch Dampfzugaben.

Die US 2010/079970 A1 beschreibt ein Ultraschallschweißverfahren zum Verbinden von Kunststoff-Metallteilen.

Der Artikel "Artungleiche Werkstoffe fügen" von Philipp Amend et.al., Kunststoffe, Carl Hanser Verlag, München, DE, Bd. 102, Nr. 12, 1. Januar 2012, Seiten 56 bis 58, XP001526499, ISSN:0023-5563 beschäftigt sich mit Schmelzkleben von Kunststoffen auf CFK oder Metallteile.

Der Erfindung liegt daher die Aufgabe zugrunde, ein alternatives Verbindungsverfahren anzugeben, welches vergleichsweise einfach auszuführen ist und aus welchem eine verlässliche und dauerfeste Verbindung resultiert, die insbesondere auch unanfällig ist gegen Temperaturschwankungen. Ferner besteht die Aufgabe darin, ein einfach und damit kostengünstig herstellbares Fenster- und Türrahmen anzugeben, das sich durch eine hochfeste Verbindung zwischen Kunststoffschaumkörper und Metallprofilelement auszeichnet.

Hinsichtlich des Fenster- oder Türrahmenelements wird die Aufgabe mit den Merkmalen des Anspruchs 12 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, das mindestens eine, insbesondere als Strangpressprofil ausgebildete Metallprofilelement, vorzugsweise ein Leichtmetalllegierungsprofilelement, noch weiter bevorzugt ein Aluminiumlegierungsprofilelement unmittelbar mit dem Kunststoffschaumkörper zu verbinden, und zwar über eine Klebeverbindung auf Basis des Kunststoffschaumkörpermaterials, also dem thermoplastischen Kunststoff des Kunststoffschaumkörpers, insbesondere PET. Erfindungsgemäß wird die vorerwähnte Klebeverbindung zwischen dem Kunststoffschaumkörper und dem Metallprofilelement hergestellt durch Anschmelzen des Kunststoffschaumkörpers an einer Kontaktfläche und dadurch Umwandeln des Kunststoffschaumkörpers im Kontaktbereich zum Metallprofilelement zu einem Heißkleber, der nach Aushärten durch Abkühlen eine gute Haftung zwischen Kunststoffschaumkörper und Metallprofilelement sicherstellt. Anders ausgedrückt wird erfindungsgemäß der Kunststoffschaumkörper im Kontaktbereich zum Metallprofilelement mindestens auf Schmelztemperatur des thermoplastischen Kunststoffs, insbesondere PETs des Kunststoffschaumkörpers zum Herstellen der Klebeverbindung zwischen Kunststoffschaumkörper und Metallprofilelement erwärmt und haftet nach Erkalten an diesem.

Im Falle des Einsatzes von PET-Schaum als Kunststoffschaumkörper beträgt diese Schmelztemperatur in etwa 240°C, wobei es bevorzugt ist, wenn die Prozesstemperatur, also die Temperatur auf die das mindestens eine Metallprofilelement erwärmt wird darüber liegt, insbesondere um mindestens 5°C. Für den bevorzugten Fall, dass es sich bei dem Schaumstoff um PET handelt, sollte die Prozesstemperatur, also die Temperatur des Metallprofils und/oder der Kunststoffoberfläche bevorzugt mindestens 250°C betragen. Besonders bevorzugt ist diese Prozesstemperatur im Falles des Einsatzes von PET-Schaumkörpern aus einem Temperaturbereich zwischen 250°C und 290°C, insbesondere zwischen 260°C und 270°C, gewählt. Besonders zweckmäßig ist eine Ausführungsform des Verfahrens, bei dem bewusst auf zusätzliche Kleber zum Herstellen der vorerwähnten Klebeverbindung verzichtet wird, also eine Ausführung des Verfahrens, bei der die Klebeverbindung vollständig durch Anschmelzen des Kunststoffschaumkörpers im Kontaktbereich hergestellt wird und somit ausschließlich aus einem Abschnitt des Kunststoffschaumkörpers selbst besteht.

Grundsätzlich ist es bevorzugt, wenn der Kunststoffschaumkörper seine Oberfläche so auf eine Temperatur erwärmt, aufgrund derer er erweicht, so dass die erweichte Schicht an der Oberfläche, insbesondere unter Druckbeaufschlagung in die, vorzugsweise vorbehandelte, Struktur des mindestens einen Metallprofils eindringen kann. Bei Abkühlung verfestigt sich der in die, bevorzugt Hinterschnitte aufweisende Metallstruktur eingedrungene Kunststoff und verbindet sich damit fest (bevorzugt formschlüssig).

Ganz allgemein gilt für teilkristalline Kunststoffe bzw. Kunststoffschaumkörper, wie solche aus PET, dass diese an der Oberfläche bevorzugt mindestens auf Schmelztemperatur erhitzt werden. Bei amorphen Kunststoffen ist eine solche Schmelztemperatur nicht exakt definiert - vielmehr beginnen amorphe Kunststoffe über die Glastemperatur langsam zu erweichen. Die Erhitzungstemperatur und Zeit muss unabhängig von der Art des Kunststoffs (teilkristallin oder amorph) so erwärmt werden, dass der Kunststoff so erweicht, dass er die gewünschten Heißklebereigenschaften erlangt, und/oder dass er in eine Oberflächenstruktur, insbesondere Hinterschnitte und/oder eine Oberflächenrauheit des mindestens einen Metallprofilelementes eindringt und dort aushärtet.

Grundsätzlich ist es bevorzugt, wenn zum Herstellen der Klebeverbindung, insbesondere während der Bestromung ein Anpressdruck zum Gegeneinanderpressen von Kunststoffschaumkörper und Metallprofilelement aufgebracht wird, insbesondere ein gleichmäßiger Anpressdruck über die Längenerstreckung der herzustellenden Klebeverbindung. Dabei hat es sich als besonders vorteilhaft herausgestellt, wenn der Anpressdruck so eingestellt ist bzw. wird, dass er maximal der Druckfestigkeit des Kunststoffschaumkörpers bei 20°C entspricht. Die Druckfestigkeit ist dichteabhängig. Im Folgenden wird der Zusammenhang von Druckfestigkeit und Dichte am Beispiel PET-Schaum eingeblendet:

| **Dichte [kg/m3]** | **Druckfestigkeit [MPa]** |
|---|---|
| 60 | 0.8 |
| 100 | 1.4 |
| 210 | 3.5 |
| 320 | 7.0 |

Bevorzugt beträgt ein Mindest-Anpressdruck 0,0005 MPa.

Das erfindungsgemäße Verfahren ist überraschend einfach durchführbar und führt zu hochfesten, temperaturschwankungsstabilen bzw. dauerfesten Verbindungen, so dass ein aus dem erfindungsgemäßen Verfahren resultierendes Verbundelement insbesondere geeignet ist zum Einsatz als Bestandteil eines Fenster- oder Türrahmens bzw. eines Fenster- oder Türflügels. Auf den Einsatz separater Klebstoffe oder separater Formschlussfixierelemente kann mit Vorteil verzichtet werden, wodurch die Herstellung vereinfacht und die Kosten ohne Qualitätseinsbußen bei der Verbindungsqualität reduziert werden können.

Grundsätzlich ist es zur Herstellung eines Verbundelementes möglich den Kunststoffschaumkörper, beispielsweise an einer Flächenheizung, zu erwärmen und erst danach mit dem kalten oder alternativ ebenfalls erwärmten Metallprofilelement in Kontakt zu bringen. Erfindungsgemäß ist vorgesehen, dass das Erwärmen und dadurch Anschmelzen des Kunststoffprofilelementes zumindest teilweise, bevorzugt ausschließlich über, das Metallprofilelement erfolgt. Auch hier ist es grundsätzlich möglich, zunächst das Metallprofilelement gesondert zu erwärmen und danach den Kunststoffschaumkörper mit diesem in Kontakt zu bringen und insbesondere anzupressen. Besonders zweckmäßig ist jedoch eine Ausführungsform, bei der das Erwärmen des Metallprofilelementes zum Zwecke des Anschmelzens des Kunststoffkörpers nach dem Inkontaktbringen von Kunststoffschaumkörper und Metallprofilelement durch Erwärmen des Metallprofilelementes erfolgt, so dass der hierzu notwendige Positionierschritt vor dem Erwärmen des Metallprofilelementes durchgeführt werden kann.

Im Hinblick auf die konkrete Ausgestaltung des Kunststoffschaumkörpers gibt es unterschiedliche Möglichkeiten. Wesentlich ist, dass dieser zumindest thermoplastisches Kunststoffmaterial umfasst oder bevorzugt daraus besteht. Ganz besonders bevorzugt ist es, wenn der Kunststoffschaumkörper PET (Polyethylenterephthalat) umfasst oder daraus besteht, wobei auch alternative Ausgestaltungen möglich sind, bei denen der Kunststoffschaumkörper einen oder mehrere der folgenden Kunststoffe umfasst oder daraus besteht: Polyethylen (PE), Polypropylen (PP), Polystyrol (PS), Polyvinylchlorid (PVC), wobei grundsätzlich (zusätzlich oder alternativ) auch alternative Kunststoffe hierzu eingesetzt werden können.

Als besonders zweckmäßig hat es sich herausgestellt, wenn die Dichte des Kunststoffschaumkörpers im Hinblick auf die Erzielung eines guten Kompromisses zwischen der Festigkeit/Stabilität des Verbundelementes einerseits und zur Erzielung eines guten Gesamtwärmeleitfähigkeitskoeffizienten andererseits eine Dichte aus einem Wertebereich zwischen 60 und 500 kg/m³, ganz besonders bevorzugt 150 und 350 kg/m³ aufweist.

Auch ist vorteilhaft, wenn eine Dickenerstreckung des Kunststoffschaumkörpers senkrecht zur Flächenerstreckung der Kontaktfläche mindestens 2 cm, vorzugsweise aus einem Wertebereich zwischen 3 cm und 8 cm beträgt.

Ebenso ist es vorteilhaft, wenn sich der Kunststoffschaumkörper, zumindest näherungsweise über die gesamte Längenerstreckung des Metallprofilelementes erstreckt und/oder eine Länge der erfindungsgemäß hergestellten Klebeverbindung zumindest näherungsweise der Längenerstreckung des Kunststoffkörpers in Richtung der Längenerstreckung des Metallprofilelementes entspricht.

Ganz besonders bevorzugt ist eine Ausführungsform des Verfahrens, bei der dieses mit vergleichsweise langen, d.h. eine große Axialerstreckung aufweisenden Kunststoffschaumkörpern und/oder Metallprofilelementen durchgeführt wird und das so erhaltene (lange) Verbundelement später auf das gewünschte Längenmaß abgelängt wird. Bevorzugt beträgt die Längenerstreckung der Kunststoffschaumkörper und/oder Metallprofilelementen mindestens 2 m, vorzugsweise mindestens 3 m, noch weiter bevorzugt mindestens 4 m, ganz besonders bevorzugt mindestens 5 m.

Auch ist es möglich, mehrere (separate) Kunststoffschaumkörper nebeneinander anzuordnen und (gemeinsam) mit einem langen Metallprofilelement zu einem Verbundelement zu verbinden. So können bevorzugt Metallprofilelemente, insbesondere gleichzeitig, mit einer Mindestlänge von 3 m, insbesondere mindestens 4 m, ganz besonders bevorzugt mindestens 5 m eingesetzt werden, die beispielsweise mit zwei oder mehr, nebeneinander anzuordnenden Kunststoffschaumkörpern in der zuvor beschriebenen Weise verbunden werden. Hieraus resultiert dann auch ein langes Verbundelement mit einer durchgehenden, sich über sämtliche Kunststoffschaumkörper erstreckenden Klebeverbindung, deren Längenerstreckung bevorzugt zumindest näherungsweise der Längenerstreckung des Metallprofilelementes entspricht.

Grundsätzlich gibt es zum Anschmelzen der Kontaktfläche des Kunststoffschaumkörpers unterschiedliche Möglichkeiten. Denkbar ist es beispielsweise den Kunststoffschaumkörper und/oder das Metallprofilelement mittels heißer Luft zu erhitzen, oder das Metallprofilelement in einem Ofen zu erwärmen. Denkbar ist auch eine Erwärmung durch Vibration, vergleichbar mit einem Vibrationsschweißen oder ein induktives Aufheizen des Metallprofilelementes.

Problematisch bei den vorgenannten Verfahren ist jedoch, dass es technologisch schwierig ist, ein homogenes Temperaturfeld zu erzeugen, d.h. das Metallprofilelement im Kontaktbereich homogen bzw. gleichförmig zu erwärmen, um ein gleichmäßiges Anschmelzen des mindestens einen Kunststoffschaumkörpers über diese Längenerstreckung zu gewährleisten. So ist es bei der Anwendung eines Induktionsverfahrens beispielsweise notwendig, die elektromagnetische Spule entlang des Metallprofils zu verfahren, so dass Bereiche, die zuerst induktiv beaufschlagt werden mehr Zeit zum Erkalten haben. Eine homogene Erwärmung des Metallprofils in einem Ofen ist zwar grundsätzlich möglich, jedoch immer noch vergleichsweise umständlich, insbesondere wenn sehr lange Metallprofilelemente erhitzt werden sollen. Auch bei einem Ofenprozess vergeht notwendigerweise eine gewisse Zeit vor dem Aufbringen des Kunststoffschaumkörpers auf das erwärmte Metallprofilelement, so dass es selbst bei einem derartigen Verfahren zu einem ungleichmäßigen Temperaturprofil über die Längenerstreckung kommen kann.

Der Erfindung liegt jedoch die Erkenntnis zugrunde, dass eine homogene Temperaturverteilung vorteilhaft im Hinblick auf eine möglichst gleichförmige und dauerfeste Klebeverbindung ist, die unabhängig von der Position eine gute Haftung zwischen Kunststoffschaumkörper und Metallprofilelement sicherstellt.

Erfindungsgemäß ist daher mit Vorteil vorgesehen, das Metallprofilelement elektrisch zu kontaktieren und zu Erwärmungszwecken zu bestromen. Das Metallprofilelement bildet dabei einen sich gleichförmig erwärmenden, elektrischen Widerstand. Besonders zweckmäßig ist es dabei, das Metallprofilelement an den entlang seiner Längserstreckung voneinander abgewandten Enden elektrisch zu kontaktieren. Zur elektrischen Kontaktierung können beispielsweise Kupferanschlüsse eingesetzt werden.

Es hat sich herausgestellt, dass es zur Verkürzung der Erwärmungszeit vorteilhaft ist, möglichst große Ströme, insbesondere bei niedrigen elektrischen Spannungen einzusetzen. Grundsätzlich ist es von Vorteil, wenn die Stromstärke so gewählt wird, dass die Stromdichte mindestens 2 A/mm², bevorzugt mindestens 5 A/mm², noch weiter bevorzugt über 10 A/mm² ganz besonders bevorzugt über 15 A/mm² beträgt, bezogen auf die senkrecht zur Längserstreckung des Metallprofilelementes verlaufende Vollmetallquerschnittsfläche des Metallprofilelementes.

So wurden beispielsweise gute Ergebnisse bei der Verwendung von Leichtmetalllegierungsprofilelementen (Strangpressprofilelementen) erzielt, an welche eine elektrische Spannung von etwa 1,3 V angelegt wurde und durch die ein Strom von 3500 A fließt. Bei gegebener Profilgeometrie beträgt vorliegend die Stromdichte 14,3A/mm². Wird die elektrische Leistung noch höher gewählt, können Erwärmungszeiten zum Erwärmen des Metallprofilelementes mindestens auf Schmelztemperatur des thermoplastischen Kunststoffkörpers, beispielsweise auf 270°C von unter 15 s erreicht werden.

Besonders bevorzugt ist dabei eine Ausführungsvariante des Verfahrens, bei der der Kunststoffschaumkörper vor der Bestromung und/oder zumindest (noch) während der Bestromung mit dem Metallprofilelement in Kontakt gebracht wird, wobei es alternativ auch denkbar ist, das Metallprofilelement zunächst vollständig zu erwärmen und nach Abschaltung der Bestromung den Kunststoffschaumkörper in Kontakt mit dem Metallprofilelement zu bringen. Das Inkontaktbringen vor der Bestromung ist bevorzugt.

Bei Bedarf kann auch zusätzlich zu einer Erwärmung des Metallprofilelementes der Kunststoffschaumkörper im Bereich seiner Kontaktfläche vor dem Inkontaktbringen mit dem Metallprofilelement auf oder unterhalb der Schmelztemperatur erwärmt werden. Im Hinblick auf eine Vereinfachung des Verfahrens ist es jedoch vorteilhaft die Erwärmung des Kunststoffschaumkörpers im Falle teilkristalliner Kunststoffe, wie PET mindestens auf Schmelztemperatur ausschließlich durch eine Erwärmung des Metallprofilelementes zu erreichen. Im Falle des Einsatzes amorpher Kunststoffe ist, wie erwähnt, zu beachten, dass hier die Schmelztemperatur nicht exakt definiert ist - diese Kunststoffe beginnen über die Glastemperatur langsam zu erweichen. Unabhängig von der Art des Kunststoffs (teilkristallin oder amorph) ist die Temperatur und die Zeit so zu wählen, dass der Kunststoff sich oberflächlich derart erweicht, dass er die Funktion eines Verbindungs- bzw. Fixiermittels, insbesondere eines Heißklebers, erlangt und an dem mindestens einen Metallprofilelement anhaftet und/oder sich mit diesem formschlüssig verbindet, insbesondere durch Eindringen in eine Oberflächenstruktur und dortiges Aushärten.

Um die Haftung zwischen dem Kunststoffschaumkörper und dem Metallprofilelement weiter zu verbessern, ist in Weiterbildung der Erfindung vorgesehen, das Metallprofilelement oberflächenzubehandeln, insbesondere durch Sandstrahlen, Anschleifen und/oder mittels Laser. Ziel ist eine Aufrauung der Oberfläche, um die Kontaktfläche zwischen dem geschmolzenen thermoplastischen Kunststoff des Kunststoffschaumkörpers und dem Metallprofilelement zu erhöhen.

Besonders zweckmäßig ist es, wenn das Metallprofilelement eine Oberflächenrauhigkeit (Mittenrauwert) Rₐ größer 0,8 µm, bevorzugt größer 10 µm aufweist.

Ganz besonders bevorzugt ist es die Oberfläche so zu bearbeiten, dass Hinterschnitte in der Metallprofilelementoberfläche erzeugt werden, die von dem thermoplastischen Kunststoff des Kunststoffschaumkörpers hinterflossen und somit im ausgehärteten (abgekühlten) Zustand hintergriffen wird, wodurch die Festigkeit der Verbindung weiter erhöht wird. Derartige Hinterschnitte können beispielsweise durch mechanische Bearbeitung des Metallprofilelementes realisiert werden oder alternativ unmittelbar bei der Herstellung des Metallprofilelementes, beispielsweise als Strangpressprofil. Auf die vorgenannten Weisen können beispielsweise Schwalbenschwanznuten realisiert werden, die von dem thermoplastischen Kunststoff des Kunststoffschaumkörpers hinterflossen und dann hintergriffen werden können. Ganz besonders bevorzugt ist eine Ausführungsform, wie diese im Folgenden noch erläutert werden wird, bei der die Hinterschnitte mittels Lasertechnologie geschaffen werden.

Zum Erzeugen solcher Hinterschnitte mittels Lasertechnologie wird eine Laserstrahlquelle mit hoher Leistung eingesetzt, so dass Metallmaterial verdampft wird, und der hohe Sublimationsdruck die Schmelze seitlich verdrängt, insbesondere derart, dass ein Teil der Schmelze am entstehenden Strukturrand wieder erstarrt. Bevorzugt wird dieses Laserverfahren derart durchgeführt bzw. ein Metallprofilelement eingesetzt, welches mittels einer derartigen Lasertechnologie behandelt wurde, bei dem im Querschnitt tropfenartige Strukturen in der Metalloberfläche erzeugt sind. Bevorzugt weist das Metallprofilelement eine Vielzahl solcher, insbesondere im Querschnitt tropfenförmiger, Hinterschnitte auf, die, ganz besonders bevorzugt gleichmäßig über die Kontaktoberfläche zum Kunststoffschaumkörper verteilt angeordnet sind. Bevorzugt handelt es sich um langgestreckte (rillenartige) Hinterschnitte. Diese können beispielsweise einen geradlinigen oder alternativ gekrümmten oder gewellten Verlauf aufweisen. Denkbar ist es, dass sich die langgestreckten Hinterschnitte entlang der Längserstreckung des Profils oder in Breitenerstreckungsrichtung erstrecken oder schräg verlaufen, z.B. diagonal. Ganz besonders bevorzugt ist es, wenn die Eindringtiefe der Hinterschnitte in das Metallprofilelement größer ist als 100 µm, besonders bevorzugt größer ist als 150 µm und ganz besonders bevorzugt gewählt ist aus einem Wertebereich zwischen 150 µm und 300 µm. Ganz besonders bevorzugt beträgt die Eindringtiefe etwa 200 µm.

Das erfindungsgemäße Verfahren sieht, insbesondere zur Herstellung von Fenster- oder Türrahmenelementen (oder daraus hergestellten Fenster- oder Türflächen mit eingefasster Scheibe), vor einen Kunststoffkörper zwischen zwei Metallprofilelementen anzuordnen und mit beiden Metallprofilelementen, insbesondere ausschließlich, durch Anschmelzen des Kunststoffschaumkörpers an der jeweiligen Kontaktfläche zu verbinden. Bevorzugt handelt es sich bei den Metallprofilelementen dabei um Rahmenschalen eines Fenster- oder Türrahmenprofils. Besonders zweckmäßig ist es, wenn die Kontaktflächen zur Verbindung mit den beiden Profilelementen auf voneinander abgewandten Flächenseiten des Kunststoffschaumkörpers angeordnet sind bzw. werden. Erfindungsgemäß ist vorgesehen, dass das Herstellen der entsprechenden Klebeverbindungen gleichzeitig erfolgt, nämlich indem die Metallprofilelemente mit dazwischen angeordnetem Kunststoffprofilelement gleichzeitig erhitzt werden, insbesondere durch Bestromen, wie dies vorstehend im Zusammenhang mit einem Profilelement erläutert wurde. Hieraus resultiert eine erhebliche Zeiteinsparung und Verfahrenssicherheit, da zunächst beide Metallprofilelemente exakt relativ zu dem Kunststoffschaumkörper positioniert werden können und dann die Klebeverbindungen durch Bestromen der Metallprofilelemente erzeugt werden können. Ganz besonders bevorzugt ist es, wenn das Herstellen der Klebeverbindungen des Kunststoffschaumkörpers zu den Metallprofilelementen unter Anpressdruckbeaufschlagung, insbesondre senkrecht zur Flächenerstreckung der Kontaktflächen erfolgt bzw. durchgeführt wird.

Besonders bevorzugt ist es wenn in beiden Metallprofilelementen Hinterschnitte vorgesehen sind, die besonders bevorzugt mittel Lasertechnologie, wie zuvor beschrieben, hergestellt sind. Unabhängig von der konkreten Herstellungsweise der Hinterschnitte ist es bevorzugt, wenn der Kunststoffschaumkörper mit beiden Metallprofilen unmittelbar formschlüssig verbunden ist, indem der Kunststoff des Schaumkörpers (durch Anschmelzen und wieder Erstarren in den Hinterschnitten) formschlüssig verbunden ist.

Im Hinblick auf eine starke Vereinfachung des Verfahrens ist eine Ausführungsform bevorzugt, bei der neben der durch Anschmelzen des Kunststoffschaumkörpers hergestellten Klebeverbindung keine weiteren Verbindungsmaßnahmen vorgesehen sind.

Insbesondere ist es alleine durch das Anschmelzen möglich, zusätzlich zu der Klebeverbindung eine unmittelbare Formschlussverbindung zwischen Kunststoffschaumträger und Metallprofilelement zu realisieren, wenn, wie bereits erwähnt, durch die Bereitstellung eines entsprechend oberflächenbehandelten bzw. bearbeiteten Metallprofilelementes in diesem Hinterschnitte vorgesehen sind, insbesondere durch eine Laserbearbeitung, derart, dass in diese der geschmolzene thermoplastische Kunststoff des Kunststoffschaumkörpers einfließen und dort aushärten kann, so dass die Hinterschnitte von dem geschmolzenen und wieder erhärteten bzw. einteilig mit dem Kunststoffkörper ausgebildeten Kontaktbereich des Kunststoffschaumkörpers hintergriffen werden.

Zum Herstellen eines Rahmens, insbesondere eines Fenster- oder Türrahmens aus den erfindungsgemäßen Verbundelementen werden mehrere solcher Verbundelemente winklig zueinander angeordnet und aneinander befestigt, insbesondere zur Herstellung eines Fenster- oder Türflügels unter Umrandung/Einfassung eines scheibenförmigen Füllelementes, beispielsweise einer Kunststoff- oder Metallscheibe oder eines Schaumstoffelementes, eines Verbundelementes oder einer, insbesondere mehrere Glasscheibenschichten aufweisenden Glasscheibe.

Ganz besonders bevorzugt ist eine Ausführungsform des Verfahrens, bei der dieses derart durchgeführt wird, dass mittels des Verbindungsverfahrens eine Sollerstreckung, d.h. ein Sollmaß des Verbundelementes eingestellt wird. Anders ausgedrückt wird so lange ein Anpressdruck auf die miteinander zu verbindenden Teile, d.h. das mindestens eine Metallprofilelement und den mindestens einen Kunststoffschaumkörper aufgebracht, d.h. Druckbeaufschlagungsmittel auf die zu verbindenden Teile zu verstellt, bis durch entsprechendes Abschmelzen des Kunststoffschaumkörpers im Anlagebereich (Kontaktfläche) an das mindestens eine Metallprofilelement ein, vorzugsweise senkrecht zur Flächenerstreckung der Kontaktfläche gemessenes Sollmaß erreicht wird. Besonders bevorzugt wird hierzu mittels des Verfahrens ein Verbundelement hergestellt, das in der Art eines Sandwiches einen zwischen zwei Metallprofilelementen angeordneten Kunststoffschaumkörper umfasst.

Durch die weiterbildungsgemäße Verfahrensausführung können sehr enge Toleranzen eingehalten werden.

Das Verfahren kann auf unterschiedliche Art und Weise realisiert werden. Im einfachsten Fall werden Druckbeaufschlagungsmittel so lange gegen das herzustellende Verbundelement verstellt, bis die Anpressdruckbeaufschlagungsmittel (mittelbar oder unmittelbar) gegen einen das Sollmaß definierenden Anschlag verfahren, an welchem die Verstellbewegung endet. Zusätzlich oder alternativ ist es möglich, im Rahmen einer Verstellstreckenregelung das aktuelle Istmaß der zu verbindenden Elemente, insbesondere senkrecht zur Kontaktflächenerstreckung zu messen und die Druckbeaufschlagung bei Erreichen des gewünschten Sollmaßes zu unterbrechen. Bevorzugt weist das Metallprofilelement während dieses Einstellvorgangs eine ein Anschmelzen bzw. Abschmelzen des Kunststoffschaumkörpers sicherstellende Temperatur auf und ist ganz besonders bevorzugt entsprechend stromdurchflossen.

Anders ausgedrückt sind gemäß der zuvor beschriebenen Verfahrensvariante bevorzugt Messmittel zur Messung der Ist-Erstreckung in die gewünschte, sich vorzugsweise senkrecht zur Kontaktfläche erstreckenden, Richtung vorgesehen, sowie Vergleichsmittel, die das Sensorsignal dieser Messmittel mit einem Sollwert vergleichen und bei Erreichen des Sollwertes eine Verstellung der Anpressdruckmittel auf das herzustellende Verbundbauteil unterbrechen.

Die Erfindung führt auch auf ein mittels eines nach dem Konzept der Erfindung ausgebildeten Verfahrens hergestelltes Fenster- oder Türrahmenelement. Erfindungsgemäß ist vorgesehen, dass der Kunststoffschaumkörper eine Schmelzkontaktfläche aufweist, über die er mit dem Metallprofilelement verklebt ist. Bevorzugt ist zwischen Kunststoffschaumkörper und Metallprofilelement ein nicht von dem Kunststoffschaumkörper stammendes Klebematerial, d.h. ein separater Kleber angeordnet.

Wie im Zusammenhang mit dem Verfahren erläutert, ist es besonders zweckmäßig, wenn sich die Schmelzkontaktfläche bzw. der geschmolzene und wieder erstarrte thermoplastische Kunststoff des Schaumkörpers in in der Metallprofiloberfläche vorgesehene, vorzugsweise mittels eines Lasers hergestellte Hinterschnitte erstreckt und somit Bestandteil einer (zusätzlichen) formschlüssigen Verbindung ist. Anders ausgedrückt erstreckt sich das angeschmolzene, insbesondere porenfreie Kontaktflächenmaterial des Kunststoffschaumkörpers unterhalb einer äußeren Fläche bzw. Oberfläche des Metallprofilelementes seitlich in diesen hinein und verankert somit den Kunststoffschaumkörper unmittelbar mit dem Metallprofilelement formschlüssig verbindet und gegen ein Abziehen (formschlüssig) sichert.

Ganz besonders bevorzugt ist eine Ausführungsform des Fenster- oder Türrahmenelementes, bei der dieses, insbesondere auf zwei einander gegenüberliegenden Seiten, mit jeweils einem Profilelement durch Verkleben verbunden ist, wobei die jeweilige Klebeverbindung bevorzugt ausschließlich über geschmolzenes und wieder erstarrtes Material des Kunststoffschaumkörpers hergestellt ist. Bevorzugt ist der Kunststoffschaumkörper gleichzeitig unmittelbar formschlüssig durch Eindringen von geschmolzenem Kunststoff des Kunststoffschaumkörpers in Hinterschnitte des Metallprofilelementes formschlüssig verbunden.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: in einer schematisierten Darstellung eine Vorrichtung zur Durchführung eines erfindungsgemäßen Verbindungsverfahrens zum Herstellen eines Verbundelementes,
- Fig. 2:: ein vergrößertes Detail X aus Fig. 1, und
- Fig. 3: eine Darstellung zur Erläuterung einer bevorzugten Ausführungsvariante des Verfahrens.

In den Figuren sind gleiche Elemente und Elemente mit der gleichen Funktion mit den gleichen Bezugszeichen gekennzeichnet.

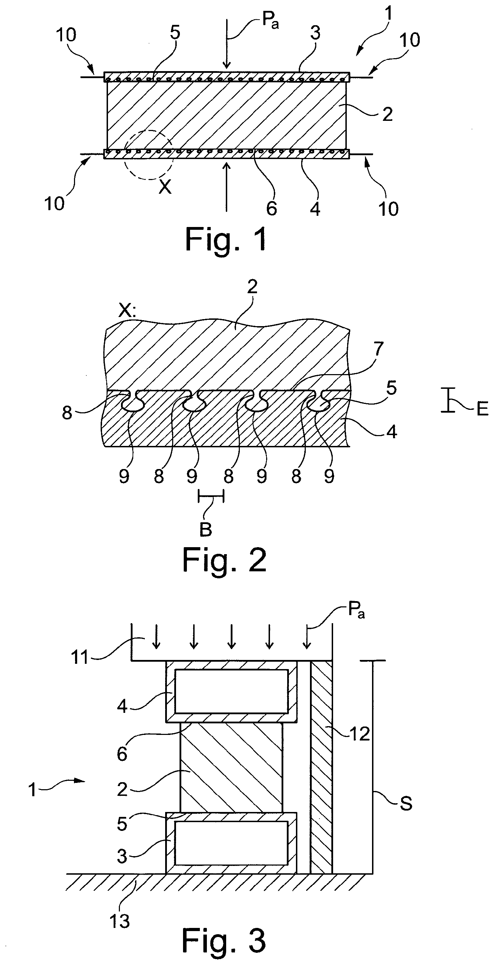

In Fig. 1 ist ein erfindungsgemäßes Verbundelement 1 in einer Vorrichtung zur Durchführung des erfindungsgemäßen Verfahrens gezeigt.

Zu erkennen ist bei dem Verbundelement 1 ein Kunststoffschaumkörper 2 aus thermoplastischem Kunststoff, hier PET, der (lediglich beispielhaft) aufgenommen ist zwischen zwei Metallprofilelementen 3, 4, die in dem konkreten Ausführungsbeispiel als Aluminiumstrangpressprofile ausgebildet sind und die eine Längenerstreckung von bevorzugt mindestens 5 m aufweisen.

Die Metallprofilelemente 3, 4 sind an ihren in Richtung der Längserstreckung der Metallprofilelemente 3, 4 beabstandeten Enden elektrisch kontaktiert (elektrische Kontaktierungen 10), wobei die Sandwichanordnung mit einem Anpressdruck Pₐ von größer als 0,0005 MPa beaufschlagt ist.

Bei Bestromung der Metallprofilelemente 3, 4 fließt durch diese ein hoher elektrischer Strom, von beispielhaft über 5000 A in Richtung der Längserstreckung der Metallprofilelemente. Die elektrische Spannung, insbesondere eine Wechselspannung, beträgt bevorzugt unter 5 V. Die benötigte elektrische Spannung ergibt sich aus dem vorgegebenen Strom bzw. der Stromdichte und dem elektrischen Widerstand des Metallprofilelementes.

Aufgrund des Stromflusses (bzw. des elektrischen Widerstands) erwärmen sich die Metallprofilelemente 3, 4 gleichförmig über ihre Längserstreckung auf eine Temperatur oberhalb der Schmelztemperatur des Kunststoffschaumkörpers 2, so dass dieser an seinen voneinander abgewandten Kontaktflächen 5, 6 zu den Metallprofilelementen 3, 4 angeschmolzen wird. Es entsteht somit ein Heißkleber aus dem thermoplastischen Kunststoffmaterial des Kunststoffschaumkörpers, der eine Klebeverbindung zu den Metallprofilelementen 3, 4 herstellt. Zusätzlicher (separater) Kleber wird in dem gezeigten, bevorzugten Ausführungsbeispiel nicht eingesetzt.

In Fig. 2 ist ein vergrößertes Detail X aus Fig. 1 gezeigt. Zu erkennen ist, dass in der den Kunststoffschaumkörper 2 zugewandten Oberfläche 7 der Metallprofilelemente 3, 4 Hinterschnitte 8 eingebracht sind, die in dem konkreten Ausführungsbeispiel durch Laserbearbeitung und Metallverdampfung erzeugt sind. In die erzeugten, die Hinterschnitte 8 begrenzenden Vertiefungen 9, die querschnittlich eine tropfenförmige Form aufweisen ist geschmolzenes thermoplastisches Kunststoffmaterial des Kunststoffkörpers 2 eingeflossen - anders ausgedrückt erstreckt sich die angeschmolzene Kontaktfläche 5 des Kunststoffschaumkörpers 2 in die Vertiefungen hinein und hintergreift somit die Hinterschnitte 8, so dass der Kunststoffschaumkörper 2 zusätzlich zu der Klebeverbindung über eine formschlüssige Verbindung unmittelbar mit den Metallprofilelementen 3, 4 verbunden ist (alternativ beispielsweise nur mit einem einzigen Metallprofilelement), wobei die Formschlussverbindung zwischen Hinterschnitten 8 in den Metallprofilelementen 3, 4 sowie aufgeschmolzenem und wieder erstarrtem thermoplastischen Kunststoffmaterial des Kunststoffschaumkörpers 2 realisiert ist. Bei den Hinterschnitten 8 handelt es sich um beispielhaft parallele, sich in die Zeichnungsebene hineinerstreckende (hinterschnittene) Rillen, mit einer Eindringtiefe E von etwa 200 µm und einer Breitenerstreckung B von 20-60 µm jeweils gemessen im breitesten Bereich. Der Abstand zwischen jeweils zwei benachbarten Rillen ist zwischen 100 µm und 500 µm gewählt, bevorzugt zwischen 200 µm und 500 µm.

Alternativ sind auch eine Vielzahl punktueller Hinterschnittvertiefungen realisierbar.

In Fig. 3 sind zwei, jeweils als Rechteckhohlprofile ausgebildete Metallprofilelemente 3, 4 mit dazwischen angeordnetem Kunststoffschaumkörper 2 gezeigt, die miteinander verbunden werden. Beide Metallprofilelemente 3, 4 sind zu deren Erwärmung stromdurchflossen, wobei die Metallprofilelemente 3, 4 so stark erwärmt werden, dass die Metallprofilelemente 3, 4 im Bereich der Kontaktflächen 5, 6 ein Anschmelzen des Kunststoffschaumkörpers 2, hier beispielsweise aus PET, garantieren. Anhand von Fig. 3 wird nun erläutert, wie das Verbindungsverfahren ausgeführt werden kann, um ein Sollmaß S senkrecht zur Flächenerstreckung der Kontaktflächen 5, 6 bzw. parallel zur Druckbeaufschlagungsrichtung zu realisieren. Zu erkennen ist, dass mit Hilfe von Druckbeaufschlagungsmitteln 11 ein Anpressdruck Pₐ auf das herzustellende Verbundelement 1 ausgeübt wird, wobei sich durch die Anpressdruckbeaufschlagung die Anpressdruckbeaufschlagungsmittel 11 entlang der Druckbeaufschlagungsrichtung bewegen und dabei den Kunststoffschaumkörper entlang der Druckbeaufschlagungsrichtung dickenreduzieren, was darauf zurückzuführen ist, dass der Kunststoffschaumkörper 2 im Bereich der Kontaktflächen 5, 6 abschmilzt. Das Verstellen der Anpressdruckbeaufschlagungsmittel 11 entlang der Druckbeaufschlagungsrichtung erfolgt so lange, bis das Verbundelement 1 ein Sollmaß S in der Anpressdruckrichtung aufweist. Um nun exakt dieses Maß S einzustellen gibt es unterschiedliche Möglichkeiten. So ist es im einfachsten Fall denkbar, die Anpressdruckbeaufschlagungsmittel 11 so lange in der Anpressdruckrichtung auf das Verbundelement 1 zu verstellen, bis die Anpressdruckmittel 11 gegen einen das Sollmaß S definierenden Anschlag 12 anschlagen. Zusätzlich oder alternativ ist es denkbar, ein Istmaß zu messen und bevorzugt elektronisch mit einem Sollmaß zu vergleichen und den Vorschub der Anpressdruckmittel 11 in der Druckbeaufschlagungsrichtung bei Erreichen des Sollmaßes S zu unterbrechen.

In dem gezeigten Ausführungsbeispiel liegt das herzustellende Verbundelement, genauer dessen unteres Metallprofilelement 3, auf einer harten Auflagefläche 13, beispielsweise einer Auflagefläche einer Presse auf, und die Anpressdruckbeaufschlagungsmittel 11 werden in Richtung auf diese Auflagefläche 13 verstellt. Alternativ ist es denkbar, von beiden einander gegenüberliegenden Seiten Außenseiten des herzustellenden Verbundelementes Anpressdruckmittel aufeinander zu zu verstellen, wobei auch eine solche Lösung durch Anschlagen der Anpressdruckbeaufschlagungsmittel gegen einen Sollmaßanschlag ausführbar ist und/oder durch Messen eines Istmaßes, beispielsweise eines Ist-Abstandes der Anpressdruckbeaufschlagungsmittel.

Als Istmaß kann vorliegend beispielsweise der Ist-Abstand zwischen den Anpressdruckbeaufschlagungsmitteln 11 und der harten bzw. feststehenden Auflage 13 herangezogen werden, welcher beispielsweise mittels geeigneter Abstandsmessmittel inline bestimmbar ist.

### Bezugszeichen

- 1: Verbundelement
- 2: Kunststoffschaumkörper
- 3: Metallprofilelement
- 4: Metallprofilelement
- 5: Kontaktfläche
- 6: Kontaktfläche
- 7: Oberfläche
- 8: Hinterschnitte
- 9: Vertiefungen
- 10: elektrische Kontaktierung
- 11: Anpressdruckbeaufschlagungsmittel
- 12: Anschlag
- 13: Auflagefläche

- Pₐ: Anpressdruck
- E: Eindringtiefe
- B: Breitenerstreckung

## Patentansprüche

1. Verfahren zum Herstellen eines Verbundelementes (1), insbesondere eines Fenster- oder Türrahmenelementes, mit den Schritten:
• Bereitstellen mindestens eines Metallprofilelementes (3, 4), insbesondere aus einer Leichtmetalllegierung;
• Bereitstellen mindestens eines thermoplastischen Kunststoffschaumkörpers (2),
• Festlegen des Kunststoffschaumkörpers (2) an dem Metallprofilelement (3, 4);
wobei der Kunststoffschaumkörper (2) mit dem mindestens einen Metallprofilelement (3, 4) durch Anschmelzen des Kunststoffschaumkörpers (2) an einer Kontaktfläche (5, 6) und Inkontaktbringen von Kunststoffschaumkörper (2) und Metallprofilelement (3, 4) unter Herstellung einer Klebeverbindung verklebt wird, und wobei das mindestens eine Metallprofilelement (3, 4) zum Erwärmen elektrisch kontaktiert wird, insbesondere entlang seiner Längserstreckung voneinander abgewandten Enden, und von einem elektrischen Strom durchflossen wird,
**dadurch gekennzeichnet,**
**dass** der Kunststoffschaumkörper (2) zwischen zwei Metallprofilelementen (3, 4), bevorzugt einer Rahmeninnenschale und einer Rahmenaußenschale, angeordnet und mit diesen gleichzeitig durch gleichzeitiges Erwärmen der Metallprofilelemente (3, 4) durch Bestromen auf zwei Seiten des Kunststoffschaumkörpers (2) verklebt wird.

2. Verfahren nach Anspruch 1,
**dadurch gekennzeichnet,**
**dass** die Klebeverbindung ausschließlich aus dem Kunststoffmaterial des Kunststoffschaumkörpers (2) hergestellt wird, ohne die Verwendung eines separaten Klebers.

3. Verfahren nach einem der Ansprüche 1 oder 2,
**dadurch gekennzeichnet,**
**dass** das Anschmelzen, bevorzugt ausschließlich, durch Erwärmen des mindestens einen Metallprofilelementes (3, 4), bevorzugt nach vorhergehendem Inkontaktbringen von Kunststoffschaumkörper (2) und Metallprofilelement (3, 4), durchgeführt wird.

4. Verfahren nach einem der vorhergehenden Ansprüche,
**dadurch gekennzeichnet,**
**dass** der Kunststoffschaumkörper (2) aus PET ausgebildet ist.

5. Verfahren nach einem der vorhergehenden Ansprüche,
**dadurch gekennzeichnet,**
**dass** die elektrische Spannung und die Stromstärke so gewählt sind, dass das Metallprofilelement (3, 4) mindestens auf eine Schmelztemperatur des Kunststoffschaumkörpers (2) erhitzt wird.

6. Verfahren nach einem der vorhergehenden Ansprüche,
**dadurch gekennzeichnet,**
**dass** der Kunststoffschaumkörper (2) mit den zwei Metallprofilelementen (3, 4) auf abgewandten Seiten, insbesondere Längsseiten des Kunststoffschaumkörpers (2) verklebt wird.

7. Verfahren nach einem der vorhergehenden Ansprüche,
**dadurch gekennzeichnet,**
**dass** der Kunststoffschaumkörper (2) unter Anpressdruckbeaufschlagung mit den Metallprofilelementen (3, 4) verklebt wird.

8. Verfahren nach einem der vorhergehenden Ansprüche,
**dadurch gekennzeichnet,**
**dass** der Kunststoffschaumkörper (2) ausschließlich durch Anschmelzen des Kunststoffschaumkörpers mit dem Metallprofilelement (3, 4) verbunden wird.

9. Verfahren nach einem der Anspruch 1 bis 8,
**dadurch gekennzeichnet,**
**dass** das Metallprofilelement (3, 4), insbesondere mittels Laser oder mechanisch, einbrachte, bevorzugt langgestreckte, Hinterschnitte (8) aufweist und dass geschmolzener thermoplastischer Kunststoff des Kunststoffschaumkörpers (2) in diese Hinterschnitte (8) fließt und dort aushärtet und der Kunststoffschaumkörper somit unmittelbar formschlüssig dem Metallprofilelementen (3, 4) verbunden wird.

10. Verfahren nach einem der vorhergehenden Ansprüche,
**dadurch gekennzeichnet,**
**dass** mehrere der Verbundelemente (1) zu einem Fenster- oder Türrahmen verbunden werden, insbesondere unter Aufnahme eines scheibenförmigen Füllelementes, insbesondere einer Glasscheibe.

11. Verfahren nach einem der Ansprüche 1 bis 10,
**dadurch gekennzeichnet,**
**dass** das mindestens eine Metallprofilelement (3, 4) und der Kunststoffschaumkörper (2) derart auf ein Anpressdruck (Pₐ) beaufschlagt werden, bis der Kunststoffschaumkörper (2) soweit abgeschmolzen ist, bis ein, insbesondere sich senkrecht zur Kontaktfläche (5, 6) gemessenes Sollmaß (S) der Verbundelemente (1) erreicht wird.

12. Fenster- oder Türrahmenelement hergestellt mit einem Verfahren nach einem der vorhergehenden Ansprüche, umfassend zwei Metallprofilelemente (3, 4), insbesondere aus einer Leichtmetalllegierung sowie mindestens einen daran fixierten thermoplastischen Kunststoffschaumkörper (2), insbesondere aus PET, wobei der Kunststoffschaumkörper (2) eine Schmelzkontaktfläche aufweist, über die er mit den zwei Metallprofilelementen (3, 4) auf zwei Seiten des Kunststoffschaumkörpers (3, 4) verklebt ist **dadurch gekennzeichnet,**
**dass** der Kunststoffschaumkörper (2) zwischen zwei Metallprofilelementen (3, 4), bevorzugt einer Rahmeninnenschale und einer Rahmenaußenschale, angeordnet und mit diesen gleichzeitig durch gleichzeitiges Erwärmen der Metallprofilelemente (3, 4) durch Bestromen auf zwei Seiten des Kunststoffschaumkörpers (2) verklebt wird.

13. Fenster- oder Türrahmenelement nach Anspruch 12,
**dadurch gekennzeichnet,**
**dass** die Klebeverbindung zwischen dem Kunststoffschaumkörper (2) und den Metallprofilelementen (3, 4) ausschließlich aus dem Kunststoffmaterial des Kunststoffschaumkörpers (2) besteht.

14. Fenster- oder Türrahmenelement nach einem der Ansprüche 12 oder 13,
**dadurch gekennzeichnet,**
**dass** der Kunststoffschaumkörper (2) ausschließlich über geschmolzenen und wieder erstarrten Kunststoff des Kunststoffschaumkörpers (2) an den Metallprofilelementen (3, 4) festgelegt ist, insbesondere derart, dass geschmolzenes und wieder erstarrtes Kunststoffmaterial des Kunststoffschaumkörpers (2) in Hinterschnitte (8) in den Metallprofilelementen (3, 4) eingreift.

15. Fenster- oder Türrahmenelement nach einem der Ansprüche 12 bis 14,
**dadurch gekennzeichnet,**
**dass** eine Kontaktfläche (5, 6) des Metallprofilelementes (3, 4) aufgeraut ist und/oder eine mittlere Rauheit von mindestens 0,8 µm, bevorzugt mindestens 10 µm aufweist.

16. Fenster- oder Türrahmenelement nach einem der Ansprüche 12 bis 15,
**dadurch gekennzeichnet,**
**dass** der Kunststoffschaumkörper (2), insbesondere sandwichartig zwischen den zwei Metallprofilelementen (3, 4), insbesondere einer Rahmeninnenschale und einer Rahmenaußenschale, angeordnet und mit diesen über die Schmelzkontaktfläche des Kunststoffschaumkörpers (2) verklebt ist.

17. Fenster- oder Türrahmen, umfassend mehrere winklig zueinander angeordnete Fenster- oder Türrahmenelemente nach einem der Ansprüche 12 bis 16, die vorzugsweise ein scheibenförmiges Füllelement, insbesondere eine Glasscheibe, einfassen (Fenster- bzw. Türflügel).

## Claims

1. A method for producing a composite element (1), in particular a window or door frame element, comprising the following steps:
• providing at least one metal profile element (3, 4), in particular made of a light metal alloy;
• providing at least one thermoplastic plastic foam body (2),
• fixing the plastic foam body (2) to the metal profile element (3, 4);
the plastic foam body (2) being bonded to the at least one metal profile element (3, 4) by melting the plastic foam body (2) at a contact surface (5, 6) and by contacting of the plastic foam body (2) and the metal profile element (3, 4) and thus establishing an adhesive bond, and the at least one metal profile element (3, 4) being electrically contacted in order to be heated, in particular at ends facing away from one another along the longitudinal extension of the at least one metal profile element (3, 4), and electric current flowing through the at least one metal profile element (3, 4),
**characterized in that**
the plastic foam body (2) is disposed between two metal profile elements (3, 4), preferably an inner frame shell and an outer frame shell, and that the plastic foam body (2) is simultaneously bonded to the two metal profile elements (3, 4) by simultaneous heating of the metal profile elements (3, 4) by energization on two sides of the plastic foam body (2).

2. The method according to claim 1,
**characterized in that**
the adhesive bond is exclusively realized by the plastic material of the plastic foam body (2) without using a separate adhesive.

3. The method according to claim 1 or 2,
**characterized in that**
the melting is, preferably exclusively, realized by heating the at least one metal profile element (3, 4), preferably after a preceding contacting of the plastic foam body (2) and the metal profile element (3, 4).

4. The method according to any one of the preceding claims,
**characterized in that**
the plastic foam body (2) is made of PET.

5. The method according to any one of the preceding claims,
**characterized in that**
the electric voltage and the current are selected in such a manner that the metal profile element (3, 4) is at least heated to a melting temperature of the plastic foam body (2).

6. The method according to any one of the preceding claims,
**characterized in that**
the plastic foam body (2) is bonded to the two metal profile elements (3, 4) on sides, in particular longitudinal sides, of the plastic foam body (2) facing away from one another.

7. The method according to any one of the preceding claims,
**characterized in that**
the plastic foam body (2) is bonded to the metal profile elements (3, 4) while contact pressure is being applied.

8. The method according to any one of the preceding claims,
**characterized in that**
the plastic foam body (2) is exclusively connected to the metal profile element (3, 4) by melting the plastic foam body.

9. The method according to any one of claims 1 to 8,
**characterized in that**
the metal profile element (3, 4) has, preferably elongated, undercuts (8), in particular introduced by means of laser or in a mechanical manner, and that melted thermoplastic plastic of the plastic foam body (2) flows into said undercuts (8) and cures there so that a direct positive mechanical engagement is established between the plastic foam body and the metal profile elements (3, 4).

10. The method according to any one of the preceding claims,
**characterized in that**
several composite elements (1) are connected to form a window or door frame, in particular while receiving a pane-shaped filling element, in particular a glass pane.

11. The method according to any one of claims 1 to 10,
**characterized in that**
a contact pressure (Pₐ) is applied to the at least one metal profile element (3, 4) and to the plastic foam body (2) until enough of the plastic foam body (2) has melted away for a nominal dimension (S) of the composite elements (1), in particular measured perpendicularly to the contact surface (5, 6), to be obtained.

12. A window or door frame element produced by means of a method according to any one of the preceding claims, the window or door frame element comprising two metal profile elements (3, 4), in particular made of a light metal alloy, and at least one thermoplastic plastic foam body (2), in particular made of PET, fixed thereto, the plastic foam body (2) having a melting contact surface, the plastic foam body (2) being bonded to the two metal profile elements (3, 4) on two sides of the plastic foam body (3, 4) via said melting contact surface,
**characterized in that**
the plastic foam body (2) is disposed between two metal profile elements (3, 4), preferably an inner frame shell and an outer frame shell, and that the plastic foam body (2) is simultaneously bonded to the two metal profile elements (3, 4) by simultaneous heating of the metal profile elements (3, 4) by energization on two sides of the plastic foam body (2).

13. The window or door frame element according to claim 12,
**characterized in that**
the adhesive bond between the plastic foam body (2) and the metal profile elements (3, 4) consists exclusively of the plastic material of the plastic foam body (2).

14. The window or door frame element according to claim 12 or 13,
**characterized in that**
the plastic foam body (2) is fixed to the metal profile elements (3, 4) exclusively via melted and re-solidified plastic of the plastic foam body (2), in particular in such a manner that melted and re-solidified plastic material of the plastic foam body (2) engages into undercuts (8) in the metal profile elements (3, 4).

15. The window or door frame element according to any one of claims 12 to 14,
**characterized in that**
a contact surface (5, 6) of the metal profile element (3, 4) is roughened and/or has an average roughness of at least 0.8 µm, preferably at least 10 µm.

16. The window or door frame element according to any one of claims 12 to 15,
**characterized in that**
the plastic foam body (2) is disposed, in particular in a sandwich-like manner, between the two metal profile elements (3, 4), in particular an inner frame shell and an outer frame shell, and is bonded to said metal profile elements (3, 4) via the melting contact surface of the plastic foam body (2).

17. A window or door frame comprising several window or door frame elements according to any one of claims 12 to 16 which are disposed at an angle to one another and which preferably surround a pane-shaped filling element, in particular a glass pane (window or door wing).

## Revendications

1. Procédé de fabrication d'un élément composite (1), notamment d'un élément de châssis de fenêtre ou de porte, comprenant les étapes :
• fournir au moins un élément de profil métallique (3, 4), notamment en un alliage de métal léger ;
• fournir au moins un corps en mousse de matière plastique (2) thermoplastique ;
• fixer le corps en mousse de matière plastique (2) à l'élément de profil métallique (3, 4) ;
le corps en mousse de matière plastique (2) étant collé à l'au moins un élément de profil métallique (3, 4) par fusion du corps en mousse de matière plastique (2) à une surface de contact (5, 6) et mise en contact du corps en mousse de matière plastique (2) et l'élément de profil métallique (3, 4) en réalisant une liaison adhésive, et l'au moins un élément de profil métallique (3, 4) étant contacté de manière électrique, notamment sur des extrémités opposées le long de son extension longitudinale, et étant traversé par un courant électrique afin de réaliser un chauffage,
**caractérisé en ce que**
le corps en mousse de matière plastique (2) est disposé entre deux éléments de profil métallique (3, 4), de préférence une coque intérieure de châssis et une coque extérieure de châssis, et le corps en mousse de matière plastique (2) est collé simultanément aux éléments de profil métallique (3, 4) par le chauffage simultané des éléments de profil métallique (3, 4) par l'alimentation en courant des deux côtés du corps en mousse de matière plastique (2).

2. Procédé selon la revendication 1,
**caractérisé en ce que**
la liaison adhésive est réalisée exclusivement de la matière plastique du corps en mousse de matière plastique (2) sans utiliser un adhésif séparé.

3. Procédé selon la revendication 1 ou la revendication 2,
**caractérisé en ce que**
la fusion est réalisée, de préférence exclusivement, par un chauffage de l'au moins un élément de profil métallique (3, 4), de préférence après une mise en contact précédente du corps en mousse de matière plastique (2) et de l'élément de profil métallique (3, 4).

4. Procédé selon l'une quelconque des revendications précédentes,
**caractérisé en ce que**
le corps en mousse de matière plastique (2) est en PET.

5. Procédé selon l'une quelconque des revendications précédentes,
**caractérisé en ce que**
la tension électrique et l'intensité électrique sont choisies de telle manière que l'élément de profil métallique (3, 4) est au moins chauffé à une température de fusion du corps en mousse de matière plastique (2).

6. Procédé selon l'une quelconque des revendications précédentes,
**caractérisé en ce que**
le corps en mousse de matière plastique (2) est collé aux deux éléments de profil métallique (3, 4) des côtés opposés, notamment des côtés longitudinaux du corps en mousse de matière plastique (2).

7. Procédé selon l'une quelconque des revendications précédentes,
**caractérisé en ce que**
le corps en mousse de matière plastique (2) est collé aux éléments de profil métallique (3, 4) sous l'application de pression d'appui.

8. Procédé selon l'une quelconque des revendications précédentes,
**caractérisé en ce que**
le corps en mousse de matière plastique (2) est lié à l'élément de profil métallique (3, 4) exclusivement par la fusion du corps en mousse de matière plastique.

9. Procédé selon l'une quelconque des revendications 1 à 8,
**caractérisé en ce que**
l'élément de profil métallique (3, 4) a des contre-dépouilles (8), de préférence allongées, notamment introduites au moyen d'un laser ou de manière mécanique, et que du plastique thermoplastique fondu du corps en mousse de matière plastique (2) s'écoule et durcit dans les contre-dépouilles (8) et le corps en mousse de matière plastique est donc directement lié à l'élément (3, 4) par une liaison par forme.

10. Procédé selon l'une quelconque des revendications précédentes,
**caractérisé en ce que**
plusieurs des éléments composites (1) sont liés afin de réaliser un châssis de fenêtre ou de porte, notamment en recevant un élément de remplissage en forme de disque, notamment une vitre.

11. Procédé selon l'une quelconque des revendications 1 à 10,
**caractérisé en ce**
**qu'**une pression d'appui (Pₐ) est appliquée à l'au moins un élément de profil métallique (3, 4) et au corps en mousse de matière plastique (2) jusqu'à ce que le corps en mousse de matière plastique (2) soit fondu de sorte qu'une dimension nominale (S) des éléments composites (1), notamment mesurée perpendiculairement à la surface de contact (5, 6), soit obtenue.

12. Élément de châssis de fenêtre ou de porte fabriqué par un procédé selon l'une quelconque des revendications précédentes, comprenant deux éléments de profil métallique (3, 4), notamment en un alliage de métal léger, et au moins un corps en mousse de matière plastique (2) thermoplastique, notamment en PET, fixé aux éléments de profil métallique (3, 4), le corps en mousse de matière plastique (2) ayant une surface de contact de fusion et étant collé aux deux éléments de profil métallique (3, 4) des deux côtés du corps en mousse de matière plastique (2) via ladite surface de contact de fusion,
**caractérisé en ce que**
le corps en mousse de matière plastique (2) est disposé entre deux éléments de profil métallique (3, 4), de préférence une coque intérieure de châssis et une coque extérieure de châssis, et le corps en mousse de matière plastique (2) est collé simultanément aux éléments de profil métallique (3, 4) par le chauffage simultané des éléments de profil métallique (3, 4) par l'alimentation en courant des deux côtés du corps en mousse de matière plastique (2).

13. Élément de châssis de fenêtre ou de porte selon la revendication 12,
**caractérisé en ce que**
la liaison adhésive entre le corps en mousse de matière plastique (2) et les éléments de profil métallique (3, 4) consiste exclusivement en la matière plastique du corps en mousse de matière plastique (2).

14. Élément de châssis de fenêtre ou de porte selon la revendication 12 ou la revendication 13,
**caractérisé en ce que**
le corps en mousse de matière plastique (2) est fixé aux éléments de profil métallique (3, 4) exclusivement via un plastique fondu et re-durci du corps en mousse de matière plastique (2), notamment de telle manière que la matière plastique fondue et re-durcie du corps en mousse de matière plastique (2) engage dans des contre-dépouilles (8) dans les éléments de profil métallique (3, 4).

15. Élément de châssis de fenêtre ou de porte selon l'une quelconque des revendications 12 à 14,
**caractérisé en ce**
**qu'**une surface de contact (5, 6) de l'élément de profil métallique (3, 4) est rugueuse et/ou a une rugosité moyenne d'au moins 0,8 µm, de préférence au moins 10 µm.

16. Élément de châssis de fenêtre ou de porte selon l'une quelconque des revendications 12 à 15,
**caractérisé en ce que**
le corps en mousse de matière plastique (2) est disposé, notamment en sandwich, entre les deux éléments de profil métallique (3, 4), notamment une coque intérieure de châssis et une coque extérieure de châssis, et est collé aux éléments de profil métallique (3, 4) via la surface de contact de fusion du corps en mousse de matière plastique (2).

17. Châssis de fenêtre ou de porte comprenant plusieurs éléments de châssis de fenêtre ou de porte selon l'une quelconque des revendications 12 à 16 qui sont disposés de manière angulaire l'un par rapport à l'autre et qui entourent, de préférence, un élément de remplissage en forme de disque, notamment une vitre (battant de fenêtre ou de porte).
